(19) **Europäisches Patentamt**
**European Patent Office**
**Office européen des brevets**

(11) **EP 3 598 391 B1**

(12) **EUROPEAN PATENT SPECIFICATION**

(45) Date of publication and mention
of the grant of the patent:
**06.09.2023 Bulletin 2023/36**

(21) Application number: **18183598.4**

(22) Date of filing: **16.07.2018**

(51) International Patent Classification (IPC):
**G06T 11/40** *(2006.01)*    **G06T 15/00** *(2011.01)*

(52) Cooperative Patent Classification (CPC):
**G06T 11/40; G06T 15/005**

(54) **VARIABLE RESOLUTION RENDERING**

RENDERING MIT VARIABLER AUFLÖSUNG

RENDU À RÉSOLUTION VARIABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.01.2020 Bulletin 2020/04**

(73) Proprietor: **Huawei Technologies Co., Ltd.
Shenzhen, Guangdong 518129 (CN)**

(72) Inventors:
• **LIU, Baoquan**
**80992 Munich (DE)**
• **LI, Juntao**
**80992 Munich (DE)**

(74) Representative: **Pfenning, Meinig & Partner mbB
Patent- und Rechtsanwälte
Theresienhöhe 11a
80339 München (DE)**

(56) References cited:
**US-A1- 2018 182 066**

• **Karthik Vaidyanathan ET AL: "Coarse Pixel
Shading", High Performance Graphics, January
2014 (2014-01), pages 1-10, XP055537095, DOI:
10.2312/hpg.20141089 Retrieved from the
Internet:
URL:http://citeseerx.ist.psu.edu/viewdoc/d
ownload?doi=10.1.1.674.1958&rep=rep1&type=
pdf [retrieved on 2018-12-20]**
• **DANIEL POHL ET AL: "Improved pre-warping for
wide angle, head mounted displays", THE 19TH
ACM SYMPOSIUM ON VIRTUAL REALITY
SOFTWARE AND TECHNOLOGY, VRST'13;
SINGAPORE; OCTOBER 6-9, 2013, January 2013
(2013-01), page 259, XP055237173, New York, NY,
USA DOI: 10.1145/2503713.2503752 ISBN:
978-1-4503-2379-6**
• **BRIAN GUENTER ET AL: "Foveated 3D
graphics", ACM TRANSACTIONS ON GRAPHICS,
vol. 31, no. 6, November 2012 (2012-11), page 1,
XP055199808, ISSN: 0730-0301, DOI:
10.1145/2366145.2366183**

**Description**

This invention relates to rendering of images by a graphics processing unit (GPU).

Advances in computer graphics have enabled the creation of digital images of astonishing complexity and realism. However, processing power and resources are still a limiting factor and many costly but desirable aspects of realism are often not accounted for, especially in real-time rendering. At the same time, there is a strong trend towards a greater number of pixels per display due to larger displays, higher pixel densities or larger fields of view. Further observable trends in current display technology include more bits per pixel (high dynamic range, wider colour gamut/fidelity), increasing refresh rates (for better motion depiction), and an increasing number of displayed views per pixel (stereo, multi-view, etc.).

These developments cause significant technical challenges due to aspects such as limited compute power and bandwidth, especially for mobile devices powered by batteries.

Virtual Reality (VR) rendering is even more demanding due to the need to render the scene twice from two different points of view as a result of different displaying contents for the left and right eyes. This doubles the amount of vertex processing executed and the time spent executing draw calls in the central processing unit (CPU). Another challenge is the need to have high resolution scene and screen framebuffers (at least 1024p), since the lenses on a VR head mounted device magnify the pixels in the headset screen, making them more noticeable. High resolution framebuffers increase the amount of fragment processing executed for each frame. A further challenge is the need to have a high refresh rate (at least 60 Hz). This is needed to reduce the motion-to-photon latency and avoid dizziness and motion sickness caused when motion doesn't trigger the expected visual response in an expected short time.

Today, the achieved realism is already strongly limited by hardware capabilities, while often many desirable but costly aspects of reality are not even considered. This divergence causes significant issues on the technical side, such as limited compute power and bandwidth.

Real-time gaming and VR rendering are demanding for mobile GPUs due to the battery life of devices, heat dissipation, and the real-time or interactive rendering performance requirement with very low latency for a fast user response. Rendering realistic-looking 3D graphics at high refresh rates is computationally intense, particularly at high pixel densities and for wide field-of-view and stereo rendering in gaming and VR scenarios. The extremely-high display density of modern smartphones imposes a significant burden on GPU power for 3D rendering of games or VR content, yet does not always provide an improved user experience and may even lead to a compromised user experience.

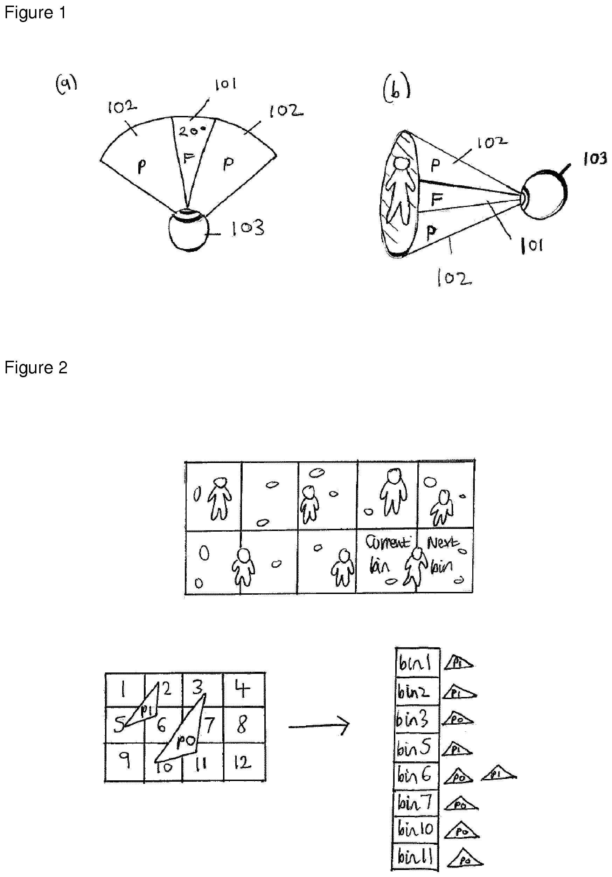

The human visual system has certain limitations, which mean that providing the highest possible visual quality is not always necessary for all screen areas. As shown in Figure 1, human vision can be divided into two components: foveal 101 and peripheral 102. Human eyes 103 can only see high resolution at the foveal area 101, while the peripheral area 102 covers a much wider field of view but lacks acuity. The "periphery" is the area surrounding the fovea which has lower resolution and thus is less capable of detecting high frequency details. Perceived sharpness decreases when moving away from the foveal region. Known foveated rendering techniques exploit this human visual characteristic to improve performance by decreasing the rendering complexity and quality in the periphery while maintaining high fidelity in the foveal area. Efficient peripheral rendering can unlock significant performance gains. By simplifying the fragment shading workload of the GPU, or by using variable-resolution shading, the performance and battery life of devices may be improved. As shown in the foveated rendering system of GUENTER, B., FINCH, M., DRUCKER, S., TAN, D., AND SNYDER, J. 2012. Foveated 3D graphics. ACM Transactions on Graphics, 31, 6, 164:1-164:10, the resulting image looks like a full-resolution image, but the number of pixels shaded are reduced by a factor of 10-15. Given a perceptual target, a practical foveated rendering system could reduce pixel shading workload by up to 70% without introducing perceivable aliasing or blur.

As human visual perception depends on the 3D content of an image and also the user's fovea location, a reduced rendering resolution at some particular areas may still achieve the same user experience, but may also achieve both a higher rendering framerate and better GPU power efficiency at the same time. Foveated rendering for VR synthesizes images with progressively less detail outside the eye fixation region, potentially unlocking significant speedups for wide field-of-view displays, such as head mounted displays for VR, where target framerate and resolution is increasing faster than the performance of traditional real-time renderers.

To support varying rate multi-resolution rendering on a GPU, prior art techniques need to make significant modifications to the uniform rasterizer of existing GPU hardware in order to implement a non-uniform rasterizer. Some techniques are also not able to vary the shading rate at multiple resolutions in order to dynamically match VR lens-distortion or fovea location tracking at runtime. Furthermore, some prior techniques require a non-regular framebuffer memory structure, such as a mip-map hierarchy, to store the rendering result, which is hard to implement on current hardware.

It is desirable to develop a method of achieving variable rendering resolution that is less costly and easy to implement for both regular gaming and VR applications.

US 2018/0182066 discusses foveation rendering, wherein a GPU may render image content for each tile at different sizes as part of the rendering pass after a binning pass in which the GPU determined to which tiles vertices of primitives belong.

K. Vaidyanathan et al: "Coarse Pixel Shading", XP055537095, pages 1-10, discusses an architecture for flexible control of shading rates in a GPU pipeline by decoupling shading and visibility by restricting and quantizing shading rates to a finite set of screen-aligned grids.

D. Pohl et al: "Improved pre-warping for wide angle, head mounted displays, XP055237173, proposes a pixel shader with reduced error and examines in-camera distortion correction which further reduces error by avoiding resampling.

SUMMARY OF THE INVENTION

The invention is defined by the appended claims. According to a first aspect, there is provided a device for rendering an image according to claim 1. This may minimize the workload of the GPU hardware and as a result, mobile battery life may be saved, the frame-rate may be improved and the shading workload significantly reduced for complex and demanding game rendering and VR rendering on mobile GPUs.

The device may be configured to calculate the scale factor based at least in part on one or more of: a lens distortion map for the image, a distance of the respective tile from an eye-tracked foveal location, a colour variation of the respective tile and/or a minimum depth value of the respective tile. A high rendering resolution may therefore be only used for the necessary pixel-tiles, but all other tiles will be rendered at lower resolution in order to minimize the hardware's workload to a large degree. All tiles of the image may have the same display resolution.

The device may be configured to render at least some of the tiles at a different resolution to the other tiles of the image. Using a reduced rendering resolution for some particular areas may still achieve the same user experience, but may achieve both a higher rendering framerate and improved GPU power efficiency.

The sub-area of the tile may be located at a corner of the tile. This is a convenient location for rendering and upscaling the intermediate image.

The scale factor may be a vector of two elements along x and y directions of the tile and the device may be configured to shrink the primitive(s) of the tile to a sub-area of the tile, the width and height of the site of the sub-area being dependent on the x and y elements of the scale factor respectively. For each tile, only a few bits in one byte are needed to encode only a few enum of this vector's down-scale factors along x and y.

The device may be configured to store the intermediate image in an on-chip memory of the graphics processing system. As a result, when upscaling the intermediate image to generate the final tile buffer content at high resolution, there is no external memory access required.

According to a second aspect there is provided a method for rendering an image according to claim 7.

The scale factor may be calculated based at least in part on one or more of: a lens distortion map for the image, a distance of the respective tile from an eye-tracked foveal location, a colour variation of the respective tile and/or a minimum depth value of the respective tile. A high rendering resolution may therefore be only used for the necessary pixel-tiles, but all other tiles will be rendered at lower resolution in order to minimize the hardware's workload to a large degree.

At least some of the tiles may be rendered at a different resolution to the other tiles of the image. Using a reduced rendering resolution for some particular areas may still achieve the same user experience, but may achieve both a higher rendering framerate and improved GPU power efficiency. All tiles of the image may have the same display resolution.

The sub-area of the tile may be located at a corner of the tile. This is convenient location for rendering and upscaling the intermediate image.

The scale factor may be a vector of two elements along x and y directions of the tile and the primitive(s) of the tile may be shrunk to a sub-area of the tile, the width and height of the site of the sub-area being dependent on the x and y elements of the scale factor respectively. For each tile, only a few bits in one byte are needed to encode only a few enum of this vector's down-scale factors along x and y.

The method may further comprise storing the intermediate image in an on-chip memory of the graphics processing system. As a result, when upscaling the intermediate image to generate the final tile buffer content at high resolution, there is no external memory access required.

According to a third aspect there is provided a non-transitory computer readable storage medium according to claim 13.

BRIEF DESCRIPTION OF THE FIGURES

Figure 1 illustrates foveal and peripheral vision in a human eye.

Figure 2 illustrates binning in Tile-Based Rendering.

Figure 3 illustrates areas which do not need to be rendered at high resolution because they are at a far distance from the camera or have low colour variation.

Figure 4 illustrates the shading rate distribution after lens warp across a single view on a VR device.

Figure 5 illustrates a scissor box for a tile and down-scaling a tile for rendering according to its scale factor.

Figure 6 illustrates tiles which are rendered at different resolutions from each other.

Figure 7 illustrates an example of a method for rendering an image.

Figure 8 illustrates an example of a device for performing rendering.

## DETAILED DESCRIPTION OF THE INVENTION

The present invention is a modification of Tile-based Rendering (TBR) techniques. Almost all mobile GPUs use TBR, instead of Immediate Mode Rendering (IMR) seen in desktop GPUs. As shown in Figure 2, in TBR, the framebuffer is partitioned into many tiles 1-12. All primitives, such as P0 and P1, are binned for each tile and then stored in linked-list data structure. Each tile maintains one list of primitives, called the Polygon List (PL), containing all the primitives that cover this tile.

TBR consists of two separate phases: a binning pass and a per-tile rendering pass. In the binning pass, all post-transformed geometry primitives are binned into the tiles. In TBR, vertex processing and shading continue as for normal IMR, but instead of vertex attributes being used immediately by a rasterizer and fragment shading core (as in IMR), triangles are saved for later use in the PL. Only after the binning pass is finished can the rendering pass then load in the PL data and perform rasterization and fragment shading on a per-tile basis. The extra bandwidth required to read and write the tiled geometry data is usually less than the bandwidth saved by keeping per-tile shading results on-chip for typical mobile applications. This is because tiling allows on-chip tile buffers (colour/depth) to be used instead of frequently accessing the off-chip memory.

The tiles may be rectangular (including square, as in the example in Figure 2), but they could be other shapes such as triangular or hexagonal. Tiles may be of various sizes. For example, tiles may be $32 \times 32$ pixels or $64 \times 64$ pixels.

In the technique described herein, modifications may be made only to the per-tile rendering pass, but the binning pass may be implemented in the same way as traditional TBR techniques. Like prior TBR approaches, the storage or display resolution (in pixels) is the same for all the tiles, which results from splitting the framebuffer into multiple rectangle tiles of the same size (i.e., *tile. width* and *tile. height).* However, unlike prior TBR approaches, which both render and store all the screen tiles at the same resolution, the rendering pattern of TBR is altered by using different rendering resolutions for different tiles. The specific rendering resolution for a tile is calculated by the GPU driver based on necessity, according to human visual perception, and/or according to VR features at each tile's specific location. The rendering resolution for a tile may therefore be different from its storage/display resolution in the final framebuffer.

Before the rendering pass for each tile, the driver calculates a down-scale factor for a tile in order to vary the pixel shading rate for the specific tile. The down-scale factor of a tile determines its rendering resolution. This factor could be a vector of two elements: *ScaleFactor.*xy, along the x and y directions. For each tile, only a few bits in one byte are needed to encode only a few enum of this vector's down-scale factors along x and y.

The down-scale factor for each tile is dependent on the prominence of the tile. The less prominent the tile, the smaller the down-scale factor. The down-scale factor is less than or equal to 1. This *ScaleFactor* could be 1.0, 1/2, 1/4, 1/8, 1/16, etc. (if the x and y directions are treated equally).

For VR applications, the GPU driver receives input from the VR application in order to calculate the down-scale factor for each individual tile. There are two VR inputs to the driver from which the prominence, and hence the scale factor of the tile, may be determined:

1). A fovea location, for example from an eye tracker, based on a quality attenuation function. This could be implemented as a 2D texture map based on the distance of a tile to the fovea location in order to control the quality falloff rate along x and y within the whole framebuffer range. For VR rendering, most pixels are peripheral. The peripheral region covers a much wider field of view but lacks acuity. The tiles at the peripheral region are less prominent than the tiles at the foveal region. Therefore, decreased rendering resolution can be used at the peripheral tiles, while at the same time maintaining high rendering resolution at the foveal tiles.

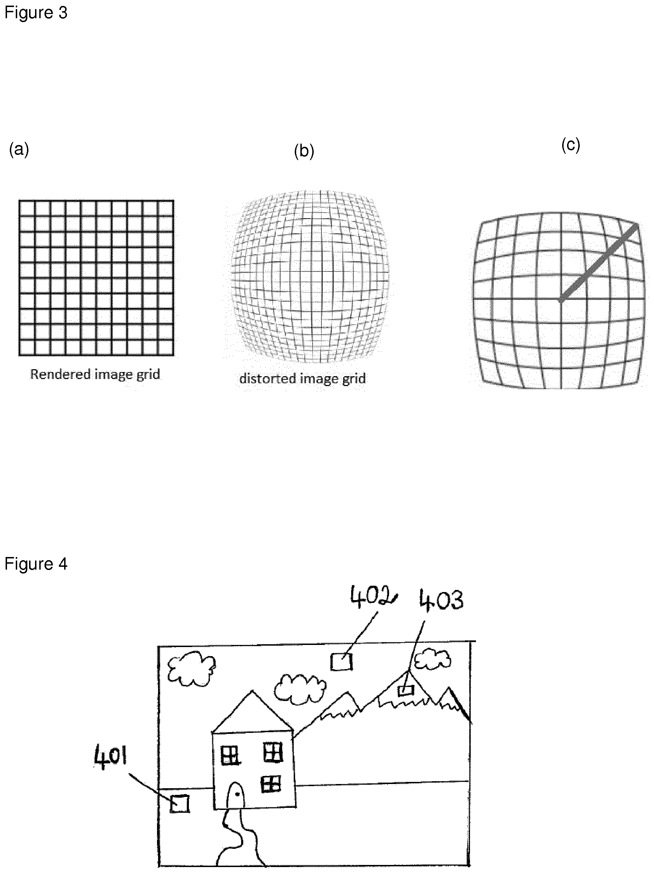

2). A lens distortion map of the VR lens. This could be implemented as a 2D texture map, which indicates the lens's distortion grid density map within the whole framebuffer range. At the end of the rendering pipeline of all VR applications, one of the steps is lens distortion, which warps the rendered image (Figure 3(a)) according to the HMD lens profile, so that when the post-warped image (Figure 3(b)) is viewed through the lens, it appears to be undistorted again. The side effect of this lens distortion is that it changes the shading rate of the original image drastically, as shown in Figure 3(c). It significantly squashes the periphery of the image, while enlarging the centre. This makes the periphery shading rate higher and the centre shading rate lower compared to the original rendered image. The shading rate distribution after lens distortion is not ideal since the periphery, which is less prominent, receives many more shades than the central region. But, viewers usually tend to focus their attention at the centre of the screen, which places these over-sampled areas in the weaker peripheral vision. Figure 3(c) illustrates this kind of non-uniform shading rate distribution across a single view on a VR system, which shows that the enlarged central area needs higher shading rate, while the squashed peripheral area needs lower shading rate. Using this kind of lens distortion map (based on lens profile) as an input to the rendering system could prevent under-sampling at the central region and oversampling at the peripheral area.

For tiles located at center area of the lens or at the foveal area, the scale factor of the tiles may be set to *ScaleFactor* = 1.0. This means that no downscaling is needed for these tiles, so the original storage resolution of these tiles will be used for rendering also. For less prominent tiles, a smaller *ScaleFactor,* may be calculated that is less than 1.0, for example based on the tile's distance to the foveal area and based on the lens distortion map via 2D texture sampling at the current tile's location.

For general mobile game rendering, the per-tile *ScaleFactor* can be calculated based on the following two observations, illustrated in Figure 4. These factors may also be used, at least in part, as inputs to the driver to calculate the scale factor for VR applications along with the foveal distance and lens distortion parameters.

1). some tiles may not require a high rendering resolution because they have a long z distance to the camera. Therefore, the per-tile *ScaleFactor* can be calculated based on the minimum depth value of this tile (minimum z distance to the camera), which is usually recorded in the coarse z-buffer for all tiles of the current frame during the binning pass. Since the minimum depth values of all tiles have already been accumulated from z-values of all primitives that cover this tile during the binning pass, in the rendering pass they can be used directly for the same frame to calculate the *ScaleFactorfor* each tile. The larger a tile's minimum depth value is, the less prominent a tile is. Therefore, the larger a tile's minimum depth value is, the smaller a tile's *ScaleFactor should* be, and the lower its rendering resolution will be.

2). some tiles may not require a high rendering resolution due to them having a low colour variation within a tile. This is illustrated in Figure 4, where areas 401, 402 and 403, corresponding to grass, sky and snow respectively, have low colour variances for their respective tiles. Other areas with low colour variance in images may include areas depicting road, walls, panels etc. These tiles are less prominent than those tiles with a high colour variation. Therefore, the per-tile *ScaleFactor* can be calculated based on a tile's colour variance of all pixels from the on-chip tile buffer, e.g, variance of luminance (i.e., Y channel of YUV colour space). At the rendering pass, the final colour values are not available in the tile buffer for the current frame, so the last frame's colour variance is used as an approximation, which can be calculated and stored at the end of the last frame's rendering pass when the on-chip tile buffer for the last frame is still available, before it is resolved to the external memory. The smaller a tile's colour variance is, the smaller the tile's *ScaleFactor* should be, and the lower its rendering resolution will be.

For the less prominent tiles, a low rendering resolution may be used in order to significantly reduce the shading workload, but still maintain the perceived image quality.

A down-scale factor may be calculated for each tile individually, or a down-scale factor may be calculated for one tile in a block of neighboring tiles and that factor may then be assigned to all tiles in that block.

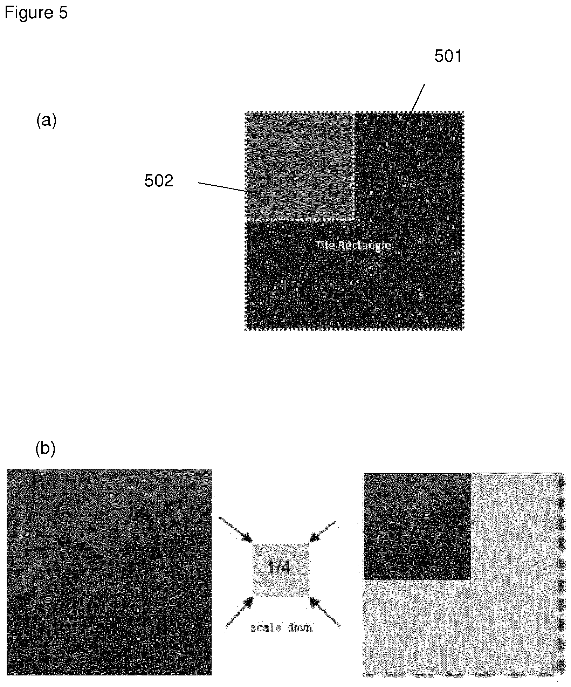

After the down-scale factor has been calculated or assigned to each tile as described above, the driver sets up a scissor box for each tile, as shown in Figure 5(a). The scissor box 502 is a down-scaled rectangle of the tile 501, for example, at the top-left corner of the tile window. The scissor window may also be located in other areas of the tile.

In TBR, the GPU driver needs to setup parameters for the tile window, viewport window and scissor window, which will be merged together to generate a final clipping rectangle for each tile. Against this clipping rectangle, the GPU hardware can perform per-tile clipping for all incoming primitives during rasterization for the tile.

The down-scaled rectangle of the tile at the top-left corner of the tile window, as shown in Figure 5(a), has size: [*tile.xmin, tile.ymin, ScaleFactor.x * tile.width, ScaleFactor.y * tile, height*].

By setting such a per-tile scissor-box, rasterization and pixel shading can be restrained to be applied only to the top-left corner of each tile for all incoming primitives, of which any parts beyond this box will not be rasterized into fragments.

During rasterization of each tile, the *ScaleFactor* is used to perform a post-viewport-transform in order to scale-down from the tile rectangle to its top-left corner for all incoming primitives that cover this tile. There is no modification to the viewport transform, which is given by the equations below (from NDC coordinates $(x_d, y_d)$ in the range of [-1, 1] into frame coordinates $(x_f, y_f)$ in the range of [0, *width/height*] at the unit of pixels):

$$\mathbf{x}_f = \frac{width}{2} * x_d + \frac{width}{2}$$

$$\mathbf{y}_f = \frac{height}{2} * y_d + \frac{height}{2}$$

After viewport transform and at the beginning of rasterization for a tile (with its top-left coordinates: *tile.xmin* and *tile.ymin),* a post-viewport-transform is performed to down-scale the tile's primitives to the top-left corner of the tile using the equations below:

$$\mathbf{x}_f = (\mathbf{x}_f - tile.xmin) * ScaleFactor.x + tile.xmin$$

$$\mathbf{y}_f = (\mathbf{y}_f - tile.ymin) * ScaleFactor.y + tile.ymin$$

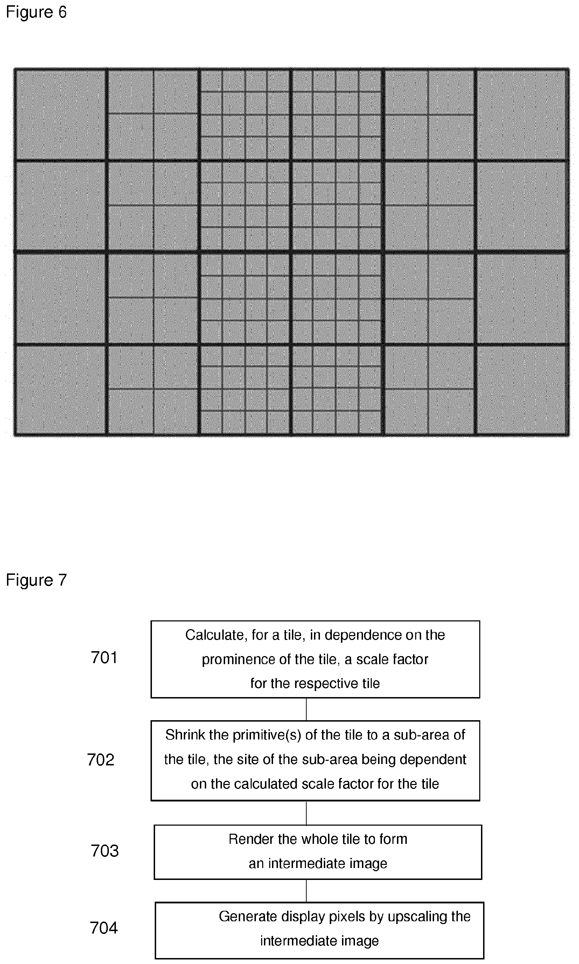

The effect of this down-scaling for a tile is shown in Figure 5(b). In this example, the scale-down factor is 1/4.
The tile is then rendered to form an intermediate image. Because the image occupies a smaller area, it is rendered at a lower resolution if it has a small scale factor.
After the rendering pass for a tile, the rendered intermediate image at the corner of the tile must be scaled up to restore the original full resolution of [*tile.width, tile.height*] by a simple 2D post-process (i.e., an image zooming-in operation), before resolving it to the external memory for final display. This 2D post-process can be performed completely inside the on-chip GPU memory, for example in an on-chip tile buffer, so no external memory accessing cost will be caused.
Therefore, for each tile, a different resolution may be used for rendering as shown in Figure 6, which is different from the original tile resolution for storage and display, according to the down-scale factor of the tile. Different tiles may use a different rendering resolution from each other. However, inside any one tile the uniform rasterizer may still be used for rendering.
Figure 7 summarises an example of a method for rendering an image that has been divided into a plurality of tiles, each tile corresponding to one or more display pixels, in a graphics processing system according to the present invention. The method comprises at 701 calculating, for a tile, in dependence on the prominence of the tile, a scale factor for the respective tile. The method continues at 702 where, for at least some of the tiles, the primitive(s) of the tile are shrunk to a sub-area of the tile, the site of the sub-area being dependent on the calculated scale factor for the tile. At 703, the whole tile is rendered to form an intermediate image, and at 704 display pixels are generated by upscaling the intermediate image.

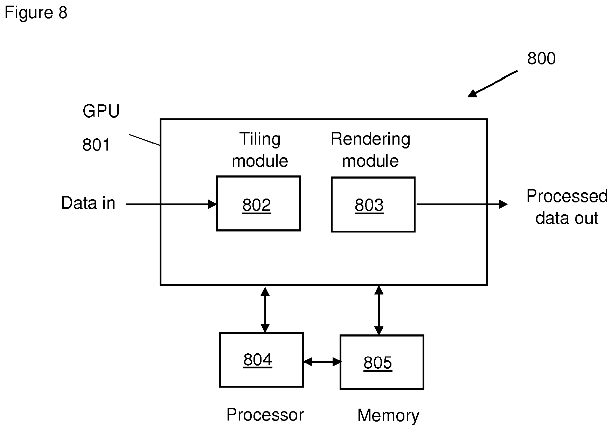

Figure 8 is a schematic representation of a tile-based graphics system 800 configured to perform the methods described herein. The system 800 may be implemented on a device, such as a laptop, tablet, smart phone, TV or any other device in which graphics data is to be processed.
System 800 is configured to receive data, for example from an application, process the data and output the processed data. The system 800 comprises a graphics processor 801 configured to process the data. For example, the processor 801 may be a GPU. Alternatively, the processor 801 may be implemented as a computer program running on a programmable device such as a GPU or a Central Processing Unit (CPU). The graphics processor 801 comprises a tiling module 802 and a rendering module 803.
The system 800 also comprises a processing unit 804 configured to process data. For example, the processor 804 may be a general purpose CPU. Alternatively, processor 804 may be implemented as a computer program running on a programmable device such as a GPU or CPU.
The system 800 comprises a memory 805 which is arranged to communicate with the graphics processor 801 and processor 804. The graphics processor 801 may also comprise a cache (not shown in Figure 8), which may be used to temporarily store data from memory 805.
The graphics processor 801 is configured to receive graphics data comprising data which defines objects that are to be displayed. The tiling module 802 receives the data and derives a plurality of primitives from the data. The tiling module 802 also divides the image into a plurality of tiles according to known TBR techniques.
The rendering module 803 is configured to render the primitives of at least some of the tiles of the image according to the methods described herein.
The rendering pattern of TBR has therefore been redesigned by introducing a new optimization of a lazy rendering pattern using a per-tile varying rendering resolution. Each tile therefore has its own pixel-shading rate, which may be different from other tiles. As a result, the GPU driver can flexibly arrange which tiles have a higher or lower rendering resolution by using a down-scale factor calculated for or assigned to each of the tiles in the image.
The present invention exploits the limitations of human perception ability to tackle visual quality and rendering workload for both gaming and VR rendering. Human visual perception is utilized along with the ability to achieve both high rendering speed and low power consumption at the same time without degrading the user experience by using a reduced rendering resolution for less prominent tiles in an image. Therefore, the GPU hardware's rendering efforts can be minimized and the shading workloads may be significantly reduced, while achieving both higher rendering framerate and better GPU power efficiency at the same time and still maintain the perceived image quality to offer a full visual experience for human users.

The above technique performs rendering at varying resolution for different tiles. A high resolution is only used for the necessary pixel-tiles, but all other tiles will be rendered at lower resolution in order to minimize the hardware's workload to a large degree. A reduced rendering resolution at some particular area may still achieve the same user experience, but achieves both a higher rendering framerate and improved GPU power efficiency at the same time. As a result, mobile battery life may be saved, the frame-rate may be improved and the shading workload significantly reduced for complex and demanding game rendering and VR rendering on mobile GPUs.

The invention is also conveniently compatible with eye tracking techniques. The down scale factor can be dynamically calculated at runtime for each individual tile according to its distance to the fovea location tracked from an eye tracker. The solution described herein can vary all tiles' shading rate individually, according to the eye tracking result at each frame.

The invention is also compatible with Lens Distortion Matching, since the down-scale factor can be calculated for each tile according to the lens distortion distribution density at each tile's location. The solution is very flexible and can vary each tile's shading rate individually according to VR foveation inputs or the lens distortion distribution at each particular tile.

The technique is very flexible and may dynamically re-arrange each tile's rendering resolution at runtime based on the scene content (near or far to the camera, and pixel colour variation within a tile buffer) at a tile's specific location. All related parameters can be changed dynamically at runtime before rendering each frame. For example, the per-tile scale factor can be changed based on some parameters, such as the disabling/enabling of foveation, changing of fovea location, fallout functions, frame buffer content, or z-buffer/coarse z-buffer content.

Instead of using an inefficient non-uniform rasterizer, as in prior art techniques, the efficient uniform rasterizer in modern GPUs can still be used. Because the rendering is tile-based, within each tile, uniform rasterization into an NxN tile buffer may be performed, although some tiles may have a rendering resolution different from other tiles.

Only one pass of the rendering pipeline is required, with an additional 2D post-processing, so there is no need to perform the 3D draw-calls multiple times for different VR zones. Only one single Render Target is needed.

This approach is also compatible with some prior techniques, such as single pass multi-view or multi-layer VR stereo rendering.

The modification to the current GPU hardware and driver is very small and therefore the technique it is very easy to implement.

There is also no change made to the binning pass, the framebuffer memory structure, or the uniform rasterizer. The original tile resolution is still used for storage and display, although the method only renders to a corner of each tile. No modification is required to any shader code or application rendering code.

The invention has application in VR devices as well as for use in general 3D rendering on mobile devices.

The invention may be modified while achieving essentially the same or similar results in the following ways: Other similar methods may be used to calculate the scale factor for each tile, which may be based on other VR parameters or framebuffer contents.

Other methods may be used to clip incoming primitives for each tile to a corner of the tile.

Other similar methods may be used to down-scale primitives from a tile window to a corner of the tile.

Other similar methods may be used for post-processing to restore from a down-scaled corner to the original full resolution for each tile.

Other similar pipeline structures of similar data processing flow may be used.

The invention is defined by the appended claims. In view of the foregoing description it will be evident to a person skilled in the art that various modifications may be made within the scope of the invention.

**Claims**

1.    A device for rendering an image in a graphics processing system, the image being divided into a plurality of tiles, each tile corresponding to one or more display pixels and at least some of the tiles containing at least one primitive of an object, which was binned into the respective tile during a binning pass of the image, the device being configured to:

calculate (Step 701), for a tile, in dependence on the prominence of the tile, a scale factor for the respective tile; and, for at least some of the tiles:

shrink (Step 702) the primitive(s) of the tile to a sub-area of the tile, the site of the sub-area being dependent on the calculated scale factor for the tile;

render (Step 703) the whole tile to form an intermediate image; and

generate (Step 704) display pixels by upscaling the intermediate image; **characterized in that** the device is configured to calculate the scale factor based at least in part on a minimum depth value of the respective tile; wherein the minimum depth value is a minimum z distance of the tile to the camera, wherein the minimum z distance of the tile is determined and stored during the binning pass of the image; and

the larger the tile's minimum depth the smaller the tile's scale factor is and the scale factor is less than one.

2.  A device as claimed in claim 1, wherein the device is configured to render at least some of the tiles at a different resolution to the other tiles of the image.

3.  A device as claimed in any preceding claim, wherein all tiles of the image have the same display resolution.

4.  A device as claimed in any preceding claim, wherein the sub-area of the tile is located at a corner of the tile.

5.  A device as claimed in any preceding claim, wherein the scale factor is a vector of two elements along x and y directions of the tile and the device is configured to shrink the primitive(s) of the tile to a sub-area of the tile, the width and height of the site of the sub-area being dependent on the x and y elements of the scale factor respectively.

6.  A device as claimed in any preceding claim, wherein the device is configured to store the intermediate image in an on-chip memory of the graphics processing system.

7.  A method for rendering an image in a graphics processing system, the image being divided into a plurality of tiles, each tile corresponding to one or more display pixels and at least some of the tiles containing at least one primitive of an object, which was binned into the respective tile during a binning pass of the image, the method comprising: calculating (Step 701), for a tile, in dependence on the prominence of the tile, a scale factor for the respective tile; and, for at least some of the tiles:

    shrinking (Step 702) the primitive(s) of the tile to a sub-area of the tile, the site of the sub-area being dependent on the calculated scale factor for the tile;

    rendering (Step 703) the whole tile to form an intermediate image; and

    generating (Step 704) display pixels by upscaling the intermediate image; **characterized in that** the scale factor is calculated based at least in part on a minimum depth value of the respective tile; wherein the minimum depth value is a minimum z distance of the tile to the camera, wherein the minimum z distance of the tile is determined and stored during the binning pass of the image; and

    the larger the tile's minimum depth the smaller the tile's scale factor is and the scale factor is less than one.

8.  A method as claimed in claim 7, wherein at least some of the tiles are rendered at a different resolution to the other tiles of the image.

9.  A method as claimed in any of claims 7 to 8, wherein all tiles of the image have the same display resolution.

10. A method as claimed in any of claims 7 to 9, wherein the sub-area of the tile is located at a corner of the tile.

11. A method as claimed in any of claims 7 to 10, wherein the scale factor is a vector of two elements along x and y directions of the tile and the primitive(s) of the tile are shrunk to a sub-area of the tile, the width and height of the site of the sub-area being dependent on the x and y elements of the scale factor respectively.

12. A method as claimed in any of claims 7 to 11, further comprising storing the intermediate image in an on-chip memory of the graphics processing system.

13. A computer readable storage medium having stored thereon computer readable instructions that, when executed at a computer system, cause the computer system to perform a method for rendering an image in a graphics processing system, the image being divided into a plurality of tiles, each tile corresponding to one or more display pixels and at least some of the tiles containing at least one primitive of an object, which was binned into the respective tile during a binning pass of the image, the method comprising: calculating (Step 701), for a tile, in dependence on the prominence of the tile, a scale factor for the respective tile;

and, for at least some of the tiles:

> shrinking (Step 702) the primitive(s) of the tile to a sub-area of the tile, the site of the sub-area being dependent on the calculated scale factor for the tile;
> rendering (Step 703) the whole tile to form an intermediate image; and
> generating (Step 704) display pixels by upscaling the intermediate image; **characterized in that** the scale factor is calculated based at least in part on a minimum depth value of the respective tile;
> wherein the minimum depth value is a minimum z distance of the tile to the camera, wherein the minimum z distance of the tile is determined and stored during the binning pass of the image; and
> the larger the tile's minimum depth the smaller the tile's scale factor is and the scale factor is less than one.

**Patentansprüche**

1. Vorrichtung zum Rendern eines Bilds in einem Grafikverarbeitungssystem, wobei das Bild in eine Vielzahl von Kacheln unterteilt ist, wobei jede Kachel einem oder mehreren Anzeigepixeln entspricht und mindestens einige der Kacheln mindestens ein Primitiv eines Objekts enthalten, das während eines Klasseneinteilungsdurchlaufs des Bilds in die jeweilige Kachel eingeteilt wurde, wobei die Vorrichtung für Folgendes konfiguriert ist:
Berechnen (Schritt 701), für eine Kachel, in Abhängigkeit von der Prominenz der Kachel, eines Skalierfaktors für die jeweilige Kachel; und, für mindestens einige der Kacheln:

> Schrumpfen (Schritt 702) des/der Primitiv(e) der Kachel auf einen Teilbereich der Kachel, wobei der Standort des Teilbereichs von dem berechneten Skalierfaktor für die Kachel abhängig ist;
> Rendern (Schritt 703) der gesamten Kachel, um ein Zwischenbild auszubilden; und Erzeugen (Schritt 704) von Anzeigepixeln durch Hochskalieren des Zwischenbilds;
> **dadurch gekennzeichnet, dass** die Vorrichtung konfiguriert ist, um den Skalierfaktor mindestens teilweise basierend auf einem minimale Tiefenwert der jeweiligen Kachel zu berechnen;
> wobei der minimale Tiefenwert ein minimaler z-Abstand der Kachel zu der Kamera ist,
> wobei der minimale z-Abstand der Kachel während des Klasseneinteilungsdurchlaufs des Bilds bestimmt und gespeichert wird; und
> je größer die minimale Tiefe der Kachel ist, desto kleiner der Skalierfaktor der Kachel ist und der Skalierfaktor kleiner als eins ist.

2. Vorrichtung nach Anspruch 1, wobei die Vorrichtung konfiguriert ist, um mindestens einige der Kacheln bei einer unterschiedlichen Auflösung als die anderen Kacheln des Bilds zu rendern.

3. Vorrichtung nach einem der vorstehenden Ansprüche, wobei alle Kacheln des Bilds die gleiche Anzeigeauflösung aufweisen.

4. Vorrichtung nach einem der vorstehenden Ansprüche, wobei sich der Teilbereich der Kachel an einer Ecke der Kachel befindet.

5. Vorrichtung nach einem der vorstehenden Ansprüche, wobei der Skalierfaktor ein Vektor von zwei Elementen entlang einer x- und y-Richtung der Kachel ist und die Vorrichtung konfiguriert ist, um das/die Primitiv(e) der Kachel auf einen Teilbereich der Kachel zu schrumpfen, wobei die Breite und die Höhe des Standorts des Teilbereichs von den x- und y-Elementen des Skalierfaktors abhängig sind.

6. Vorrichtung nach einem der vorstehenden Ansprüche, wobei die Vorrichtung konfiguriert ist, um das Zwischenbild in einem chipintegrierten Speicher des Grafikverarbeitungssystems zu speichern.

7. Verfahren zum Rendern eines Bilds in einem Grafikverarbeitungssystem, wobei das Bild in eine Vielzahl von Kacheln unterteilt wird, wobei jede Kachel einem oder mehreren Anzeigepixeln entspricht und mindestens einige der Kacheln mindestens ein Primitiv eines Objekts enthalten, das während eines Klasseneinteilungsdurchlaufs des Bilds in die jeweilige Kachel eingeteilt wurde, wobei das Verfahren Folgendes umfasst:
Berechnen (Schritt 701), für eine Kachel, in Abhängigkeit von der Prominenz der Kacheln, eines Skalierfaktors für die jeweilige Kachel; und, für mindestens einige der Kacheln:

> Schrumpfen (Schritt 702) des/der Primitiv(e) der Kachel auf einen Teilbereich der Kachel, wobei der Standort des Teilbereichs von dem berechneten Skalierfaktor für die Kachel abhängig ist;
Rendern (Schritt 703) der gesamten Kachel, um ein Zwischenbild auszubilden; und Erzeugen (Schritt 704) von Anzeigepixeln durch Hochskalieren des Zwischenbilds;
**dadurch gekennzeichnet, dass** der Skalierfaktor basierend mindestens teilweise auf einem minimale Tiefenwert der jeweiligen Kachel berechnet wird;
wobei der minimale Tiefenwert ein minimaler z-Abstand der Kachel zu der Kamera ist,
wobei der minimale z-Abstand der Kachel während des Klasseneinteilungsdurchlaufs des Bilds bestimmt und gespeichert wird; und
je größer die minimale Tiefe der Kachel ist, desto kleiner der Skalierfaktor der Kachel ist und der Skalierfaktor kleiner als eins ist.

8. Verfahren nach Anspruch 7, wobei mindestens einige der Kacheln bei einer unterschiedlichen Auflösung als die anderen Kacheln des Bilds gerendert werden.

9. Verfahren nach einem der Ansprüche 7 bis 8, wobei alle Kacheln des Bilds die gleiche Anzeigeauflösung aufweisen.

10. Verfahren nach einem der Ansprüche 7 bis 9, wobei sich der Teilbereich der Kachel an einer Ecke der Kachel befindet.

11. Verfahren nach einem der Ansprüche 7 bis 10, wobei der Skalierfaktor ein Vektor von zwei Elementen entlang der x- und y-Richtung der Kachel ist und das/die Primitiv(e) der Kachel auf einen Teilbereich der Kachel geschrumpft ist/sind, wobei die Breite und die Höhe des Standorts des Teilbereichs von den x- und y-Elementen des Skalierfaktors abhängig sind.

12. Verfahren nach einem der Ansprüche 7 bis 11, das ferner das Speichern des Zwischenbilds in einem chipintegrierten Speicher des Grafikverarbeitungssystems umfasst.

13. Computerlesbares Speichermedium, das computerlesbare Anweisungen darauf gespeichert aufweist, die, wenn sie an einem Computersystem ausgeführt werden, das Computersystem veranlassen, ein Verfahren zum Rendern eines Bilds in einem Grafikverarbeitungssystem durchzuführen, wobei das Bild in eine Vielzahl von Kacheln unterteilt ist, wobei jede Kachel entsprechend einem oder mehreren Anzeigepixeln und mindestens einigen der Kacheln, die mindestens ein Primitiv eines Objekts enthalten, das während eines Klasseneinteilungsdurchlaufs des Bilds in die jeweilige Kachel eingeteilt wurde, wobei das Verfahren Folgendes umfasst:
Berechnen (Schritt 701), für eine Kachel, in Abhängigkeit von der Prominenz der Kachel, eines Skalierfaktors für die jeweilige Kachel; und, für mindestens einige der Kacheln:

Schrumpfen (Schritt 702) des/der Primitiv(e) der Kachel auf einen Teilbereich der Kachel, wobei der Standort des Teilbereichs von dem berechneten Skalierfaktor für die Kachel abhängig ist;
Rendern (Schritt 703) der gesamten Kachel, um ein Zwischenbild auszubilden; und
Erzeugen (Schritt 704) von Anzeigepixeln durch Hochskalieren des Zwischenbilds;
**dadurch gekennzeichnet, dass** der Skalierfaktor basierend mindestens teilweise auf einem minimale Tiefenwert der jeweiligen Kachel berechnet wird;
wobei der minimale Tiefenwert ein minimaler z-Abstand der Kachel zu der Kamera ist,
wobei der minimale z-Abstand der Kachel während des Klasseneinteilungsdurchlaufs des Bilds bestimmt und gespeichert wird; und
je größer die minimale Tiefe der Kachel ist, desto kleiner der Skalierfaktor der Kachel ist und der Skalierfaktor kleiner als eins ist.

## Revendications

1. Dispositif de rendu d'une image dans un système de traitement graphique, l'image étant divisée en une pluralité de tuiles, chaque tuile correspondant à un ou plusieurs pixels d'affichage et au moins certaines des tuiles contenant au moins une primitive d'un objet, qui a été compartimentée dans la tuile respective au cours d'une passe de compartimentage de l'image, le dispositif étant configuré pour :
calculer (Étape 701), pour une tuile, en fonction de la proéminence de la tuile, un facteur d'échelle pour la tuile respective ; et, pour au moins certaines des tuiles :

rétrécir (Étape 702) la(les) primitive(s) de la tuile à une sous-zone de la tuile, le site de la sous-zone dépendant du facteur d'échelle calculé pour la tuile ;

effectuer le rendu (Étape 703) de l'ensemble de la tuile pour former une image intermédiaire ; et

générer (Étape 704) des pixels d'affichage en mettant à l'échelle l'image intermédiaire ; **caractérisé en ce que** le dispositif est configuré pour calculer le facteur d'échelle sur la base au moins en partie d'une valeur de profondeur minimale de la tuile respective ;

dans lequel la valeur de profondeur minimale est une distance z minimale de la tuile à la caméra, dans lequel la distance z minimale de la tuile est déterminée et stockée au cours de la passe de compartimentage de l'image ; et

plus la profondeur minimale de la tuile est importante, plus le facteur d'échelle de la tuile est petit et le facteur d'échelle est inférieur à un.

2. Dispositif selon la revendication 1, dans lequel le dispositif est configuré pour effectuer le rendu d'au moins certaines des tuiles à une résolution différente des autres tuiles de l'image.

3. Dispositif selon une quelconque revendication précédente, dans lequel toutes les tuiles de l'image ont la même résolution d'affichage.

4. Dispositif selon une quelconque revendication précédente, dans lequel la sous-zone de la tuile est située dans un coin de la tuile.

5. Dispositif selon une quelconque revendication précédente, dans lequel le facteur d'échelle est un vecteur de deux éléments le long des directions x et y de la tuile et le dispositif est configuré pour rétrécir la(les) primitive(s) de la tuile à une sous-zone de la tuile, la largeur et la hauteur du site de la sous-zone dépendant respectivement des éléments x et y du facteur d'échelle.

6. Dispositif selon une quelconque revendication précédente, dans lequel le dispositif est configuré pour stocker l'image intermédiaire dans une mémoire sur puce du système de traitement graphique.

7. Procédé de rendu d'une image dans un système de traitement graphique, l'image étant divisée en une pluralité de tuiles, chaque tuile correspondant à un ou plusieurs pixels d'affichage et au moins certaines des tuiles contenant au moins une primitive d'un objet, qui a été compartimentée dans la tuile respective au cours d'une passe de compartimentage de l'image, le procédé comprenant :

le calcul (Étape 701), pour une tuile, en fonction de la proéminence de la tuile, d'un facteur d'échelle pour la tuile respective ; et, pour au moins certaines des tuiles :

le rétrécissement (Étape 702) de la(des) primitive(s) de la tuile à une sous-zone de la tuile, le site de la sous-zone dépendant du facteur d'échelle calculé pour la tuile ;

le rendu (Étape 703) de l'ensemble de la tuile pour former une image intermédiaire ; et

la génération (Étape 704) de pixels d'affichage en mettant à l'échelle l'image intermédiaire ;

**caractérisé en ce que** le facteur d'échelle est calculé sur la base au moins en partie d'une valeur de profondeur minimale de la tuile respective ;

dans lequel la valeur de profondeur minimale est une distance z minimale de la tuile à la caméra, dans lequel la distance z minimale de la tuile est déterminée et stockée au cours de la passe de compartimentage de l'image ; et

plus la profondeur minimale de la tuile est importante, plus le facteur d'échelle de la tuile est petit et le facteur d'échelle est inférieur à un.

8. Procédé selon la revendication 7, dans lequel au moins certaines des tuiles sont rendues à une résolution différente des autres tuiles de l'image.

9. Procédé selon l'une quelconque des revendications 7 à 8, dans lequel toutes les tuiles de l'image ont la même résolution d'affichage.

10. Procédé selon l'une quelconque des revendications 7 à 9, dans lequel la sous-zone de la tuile est située dans un coin de la tuile.

11. Procédé selon l'une quelconque des revendications 7 à 10, dans lequel le facteur d'échelle est un vecteur de deux éléments le long des directions x et y de la tuile et la(les) primitive(s) de la tuile sont rétrécies à une sous-zone de la tuile, la largeur et la hauteur du site de la sous-zone dépendant respectivement des éléments x et y du facteur d'échelle.

12. Procédé selon l'une quelconque des revendications 7 à 11, comprenant en outre le stockage de l'image intermédiaire dans une mémoire sur puce du système de traitement graphique.

13. Support de stockage lisible par ordinateur sur lequel sont stockées des instructions lisibles par ordinateur qui, lorsqu'elles sont exécutées sur un système informatique, amènent le système informatique à réaliser un procédé permettant d'effectuer le rendu d'une image dans un système de traitement graphique, l'image étant divisée en une pluralité de tuiles, chaque tuile correspondant à un ou plusieurs pixels d'affichage et au moins certaines des tuiles contenant au moins une primitive d'un objet, qui a été compartimentée dans la tuile respective au cours d'une passe de compartimentage de l'image, le procédé comprenant :
le calcul (Étape 701), pour une tuile, en fonction de la proéminence de la tuile, d'un facteur d'échelle pour la tuile respective ; et, pour au moins certaines des tuiles :

le rétrécissement (Étape 702) de la(des) primitive(s) de la tuile à une sous-zone de la tuile, le site de la sous-zone dépendant du facteur d'échelle calculé pour la tuile ;
le rendu (Étape 703) de l'ensemble de la tuile pour former une image intermédiaire ; et
la génération (Étape 704) de pixels d'affichage en mettant à l'échelle l'image intermédiaire ;
**caractérisé en ce que** le facteur d'échelle est calculé sur la base au moins en partie d'une valeur de profondeur minimale de la tuile respective ;
dans lequel la valeur de profondeur minimale est une distance z minimale de la tuile à la caméra, dans lequel la distance z minimale de la tuile est déterminée et stockée au cours de la passe de compartimentage de l'image ; et
plus la profondeur minimale de la tuile est importante, plus le facteur d'échelle de la tuile est petit et le facteur d'échelle est inférieur à un.

Figure 1

Figure 2

Figure 3

(a)

(b)

(c)

Rendered image grid

distorted image grid

Figure 4

402  403

401

Figure 5

(a)

501

502

Scissor box

Tile Rectangle

(b)

1/4

scale down

Figure 6

Figure 7

| 701 | Calculate, for a tile, in dependence on the prominence of the tile, a scale factor for the respective tile |
| 702 | Shrink the primitive(s) of the tile to a sub-area of the tile, the site of the sub-area being dependent on the calculated scale factor for the tile |
| 703 | Render the whole tile to form an intermediate image |
| 704 | Generate display pixels by upscaling the intermediate image |

Figure 8

800

GPU
801

Tiling module

Rendering module

Data in

802

803

Processed data out

804

805

Processor

Memory

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180182066 A

**Non-patent literature cited in the description**

- **GUENTER, B. ; FINCH, M., ; DRUCKER, S. ; TAN, D. ; AND SNYDER, J.** ACM Transactions on Graphics. *Foveated 3D graphics,* 2012, vol. 31 (6), 164-1, 164-10
- **K. VAIDYANATHAN et al.** *Coarse Pixel Shading,* 1-10
- **D. POHL et al.** *Improved pre-warping for wide angle, head mounted displays*